# FASCICULE DE BREVET EUROPEEN

(11) **EP 1 652 015 B1**
(45) Date de publication et mention de la délivrance du brevet: **06.06.2012**
(21) Numéro de dépôt: 04767799.2
(22) Date de dépôt: 28.07.2004
(51) Int. Cl.: G05D 16/20, F02M 37/00

(54) **ELECTROVANNE DE REGULATION DE DEBIT ET DE PRESSION**
SOLENOIDVENTIL MIT ENTLADUNGSRATEN- UND DRUCKSTEUERUNG
DISCHARGE RATE AND PRESSURE CONTROL SOLENOID VALVE

(30) Priorité: 01.08.2003 FR 0309528
(43) Date de publication de la demande: 03.05.2006
(73) Titulaire: BorgWarner, Inc., Auburn Hills, MI 48326-2872 (US)
(72) Inventeur: ARMIROLI, Jean, F-06310 Beaulieu-sur-Mer (FR); DESAINT, Gérard, F-06500 Menton (FR); MAGNAVAL, Jean-Louis, F-06700 Saint Laurent du Var (FR); LHERMITTE, Bruno, F-06800 Cagnes-sur-Mer (FR)
(74) Mandataire: Littolff, Denis
(86) Numéro de dépôt international: PCT/FR2004/002017
(87) Numéro de publication internationale: WO 2005/013024

(56) Documents cités:
- DE-A- 19 632 368
- DE-U- 29 705 635
- US-A1- 2002 083 985

## Description

La présente invention concerne une électrovanne de régulation de débit et de pression utilisable dans un circuit comportant une partie en basse pression et une partie en haute pression.

Elle permet classiquement le contrôle du débit du fluide en basse pression, à l'aide d'un tiroir coulissant dans une chemise dans laquelle sont pratiqués au moins un orifice respectivement d'alimentation et d'échappement, ledit tiroir étant actionné électriquement au moyen d'un électroaimant agissant à l'encontre de moyens de rappel. Ces moyens de rappel sont dimensionnés et disposés de telle sorte que, à courant de commande de l'électroaimant nul, le passage entre les orifices d'alimentation et d'échappement soit obturé, puis progressivement dégagé à partir d'une valeur seuil de courant.

Une telle configuration est par exemple décrite dans le document DE 196 32 368.

La régulation de pression, également réalisée par l'électrovanne de l'invention, s'applique au fluide à haute pression. Cette invention s'applique par exemple à un système d'injection d'essence pour moteur thermique à rail commun. Ce système constitue d'ailleurs un autre volet de l'invention. Dans cette application, l'utilité de la régulation parallèle en débit et en pression résulte de la nécessité ponctuelle de décharger rapidement ledit rail en pression, par exemple lorsque l'utilisateur du véhicule relâche l'accélérateur.

La combinaison de la décharge en pression, en cas de surpression dans le rail, et du contrôle de la régulation de débit n'a jamais été mise en oeuvre à ce jour dans un même dispositif.

Dans l'exemple ci-dessus, le rail est alimenté en essence à haute pression par une pompe, elle-même tributaire d'essence à basse pression en provenance du réservoir via l'électrovanne de l'invention, qui en contrôle le débit. La régulation de pression se fait sur l'essence portée à haute pression en aval de la pompe, et elle est gérée par un calculateur obtenant des informations sur la valeur de ladite pression via un capteur disposé dans le rail commun.

Dans la suite du texte, pour expliquer le fonctionnement de l'électrovanne de l'invention, on se référera systématiquement à l'exemple des moteurs à rail commun. La basse pression dont le débit est régulé par l'électrovanne est de l'ordre de 6 bars en entrée de l'électrovanne, en provenance du réservoir à essence, et de 5 bars en sortie, en amont de la pompe. Celle-ci la porte à 120 bars, ou à 200 bars suivant les modèles de pompe et les fonctionnements moteurs. Ce sont donc des pressions de ces ordres que l'électrovanne doit gérer lorsqu'elle met en oeuvre la régulation de la haute pression.

La pression dans le rail est régulée par la régulation du débit de la vanne. Le capteur de pression donne une information qui permet au calculateur d'émettre une consigne à destination de la vanne, lui demandant de fournir plus ou moins de débit. Il s'agit donc d'un fonctionnement en boucle fermée. Si la pression est trop importante dans le rail, l'information fournie par le capteur indiquera au calculateur d'envoyer à l'électrovanne une consigne lui demandant d'agir sur la haute pression, en vue de la réduire.

A cet effet, et selon l'invention, les moyens de rappel à l'encontre desquels l'électroaimant agit sont interposés entre le tiroir et un dispositif à clapet apte à obturer un orifice d'admission dans la chemise de fluide à haute pression, lequel communique avec l'orifice d'alimentation de fluide à basse pression au moins dans la position du tiroir correspondant à un courant de commande inférieur à la valeur seuil permettant l'ouverture du passage entre les orifices d'alimentation et d'échappement du fluide à basse pression. Ces moyens de rappel sont de plus positionnés et dimensionnés de manière à ce que le clapet puisse être ouvert pour un courant égal ou proche de zéro, en vue de faire chuter la pression dans le circuit haute pression.

En d'autres termes, lorsque la valeur de pression est trop élevée dans le rail, la consigne du calculateur sera de réduire le courant envoyé à l'électroaimant, et donc de diminuer la force exercée sur le ressort interne par le noyau mobile dudit électroaimant. La surpression peut alors ouvrir le clapet, et décharger le rail, selon un faible débit, pour y faire chuter la pression. En théorie, ce débit de décharge est envoyé à destination du réservoir d'essence.

Inversement, si la pression dans le rail est trop faible, la consigne de courant envoyée par le calculateur à l'adresse de l'électroaimant est augmentée, et la conséquence est une augmentation du débit, et donc de la pression dans le rail. Dans ce cas, les moyens de rappel exercent une pression plus importante sur le clapet, qui ne peut pas s'ouvrir et maintient la haute pression dans le rail.

De préférence, le tiroir mobile est positionné et dimensionné de telle sorte que les orifices d'alimentation et d'échappement du fluide à basse pression ne soient pas mis en communication avant que la force exercée par le tiroir sur le dispositif à clapet via les moyens de rappel, en vue de la fermeture dudit clapet, ne soit suffisante pour assurer ladite fermeture lorsque la pression atteinte dans le circuit à haute pression est la pression nominale de fonctionnement.

En d'autres termes, les différents éléments participant à la régulation de débit d'une part et de pression d'autre part, pour les deux circuits respectivement à basse et haute pression, doivent être configurés de telle sorte que la régulation de débit à basse pression par mise en liaison des orifices d'alimentation et d'échappement ne s'effectue qu'après qu'une pression nominale et stable ait été atteinte dans le circuit à haute pression, pour des valeurs de courant garantissant que le clapet ne peut pas s'ouvrir. Cette séparation des caractéristiques de régulation permet de réguler le débit au ralenti du moteur de manière très précise et avec une pression constante.

En réalité, des fuites se produisent entre les orifices d'alimentation et d'échappement à basse pression, avant même que le tiroir soit en position autorisant le passage entre eux. Le débit de fuite est alors porté à haute pression par la pompe, et utilisé pour le fonctionnement du moteur au ralenti, qui ne nécessite pas de proportionnalité du débit par rapport au courant. À ce stade, il faut simplement que le courant de consigne soit suffisamment élevé pour empêcher l'ouverture du clapet lorsque la pression dans le rail permet de faire fonctionner les injecteurs au ralenti.

Mais il subsiste un intervalle entre le courant nécessaire à la fermeture du clapet à ces pressions et celui qui est requis pour le fonctionnement de la régulation de débit proportionnellement au courant, lorsque les orifices d'admission et d'échappement sont mis en relation. Cet intervalle a pour but et pour effet de ne pas introduire de variations de pression dans le rail, susceptibles de faire varier le régime moteur et donc d'engendrer du bruit ou des problèmes de fonctionnement en régime normal.

De préférence, le tiroir est entraîné par un poussoir solidaire du noyau mobile de l'électroaimant, les moyens de rappel étant constitués d'un ressort à boudins disposé axialement entre l'extrémité du tiroir et le dispositif à clapet.

La configuration générale est donc axiale, et comprend successivement le noyau mobile de l'électroaimant, une tige poussoir, le tiroir, le ressort à boudins et le dispositif à clapet.

Selon une possibilité, le dispositif à clapet comporte un manchon coulissant dans la chemise et actionné par les moyens de rappel présentant un bras axial muni d'une extrémité d'allure hémisphérique pouvant obturer l'orifice d'admission du fluide, ledit orifice débouchant, dans le volume de la chemise, au niveau d'un siège sur lequel l'extrémité hémisphérique est plaquée, en cas de fermeture du clapet.

Selon une alternative, le dispositif à clapet comporte une bille pouvant obturer l'orifice d'admission du fluide à haute pression.

La configuration précitée est optimisée pour que le clapet ne puisse pas fuir de manière aléatoire, car le programme du calculateur ne peut contrôler qu'une fuite constante, grâce à la présence du capteur de pression qui assure le fonctionnement en boucle fermée. Une fuite aléatoire, dans la mesure où elle peut engendrer des variations de pression non acceptables dans le rail, est proscrite.

Quel que soit le mode de fonctionnement du clapet, avec une bille ou un bras à tête hémisphérique, la configuration du siège de cette bille ainsi que l'agencement et la forme relatifs des différents éléments, notamment prévus en fonction de la valeur du courant, garantissent l'absence d'aléas. L'électroaimant, en particulier, est calculé pour avoir une force constante sur toute la course du tiroir, afin d'améliorer la précision de positionnement du tiroir en fonction de la consigne de courant.

Le siège consiste par exemple en un conduit axial débouchant dans la chemise et chanfreiné au niveau de sa liaison avec l'orifice d'admission, ledit conduit étant flanqué d'espaces de dégagement du fluide ouverts sur le volume de la chemise et obtenus par un coup de fraise cylindrique respectivement d'épaisseur inférieure et d'axe perpendiculaire à celui du conduit.

Le positionnement de la bille ou du bras est ainsi bien garanti, ainsi que le guidage du fluide en haute pression en provenance du circuit disposé en aval de la pompe.

Dans la configuration à bille, le manchon comporte un promontoir central axial prévu pour s'insérer dans le conduit du siège et exercer une force sur la bille.

Dans la configuration à bras axial à tête hémisphérique, c'est le bras qui est prévu pour s'insérer dans ledit conduit et obturer l'orifice d'admission.

De préférence, le manchon présente au moins un canal pour le passage du fluide vers le tiroir.

De préférence encore, l'orifice d'admission est pratiqué dans une pièce obturant la chemise, et dont la position est réglable par rapport à elle. Il est par conséquent possible de procéder à un ajustement de la position du siège en vue d'optimiser le fonctionnement de la vanne.

Selon l'invention, les moyens de rappel exercent sur le clapet, pour un courant de commande de l'électroaimant égal à zéro, une force telle qu'il faut que le fluide ait une pression de l'ordre de 30 bars pour l'ouvrir.

En principe, en cas de surpression dans le rail, la consigne de courant envoyé par le calculateur à l'électroaimant est soit une valeur nulle, soit proche de zéro. Compte tenu de l'ordre des pressions nominales qui doivent régner dans le rail au cours du fonctionnement du moteur (120,200 bars), il n'y a aucun problème pour ouvrir le clapet en cas de surpression.

L'invention, comme on l'a déjà mentionné, concerne également un système d'injection d'essence pour moteurs thermiques à rails communs, doté d'une électrovanne telle que décrite ci-dessus, dont l'orifice d'admission est connecté au circuit de fluide à haute pression disposé en aval de la pompe.

Pour que le fonctionnement puisse s'effectuer correctement, le rail commun comporte un capteur de pression relié à une unité centrale électronique servant de calculateur et qui fournit la consigne du courant à l'électroaimant de l'électrovanne. L'invention va à présent être décrite plus en détail, en référence aux figures annexées pour lesquelles :
- la figure 1 montre une représentation schématique du système d'injection d'essence selon l'invention ;
- la figure 2 représente, en coupe, une électrovanne à clapet à bille selon l'invention ;
- la figure 3 est une vue en coupe d'un manchon du dispositif à clapet à bille ;
- la figure 4 est une vue, toujours en coupe, de la pièce comportant le siège de la bille du dispositif à clapet ;
- la figure 5 illustre les caractéristiques idéales, en pression et débit, de l'électrovanne de l'invention, et
- la figure 6 représente ces mêmes caractéristiques dans un tracé reflétant plus concrètement le fonctionnement de l'électrovanne de l'invention.

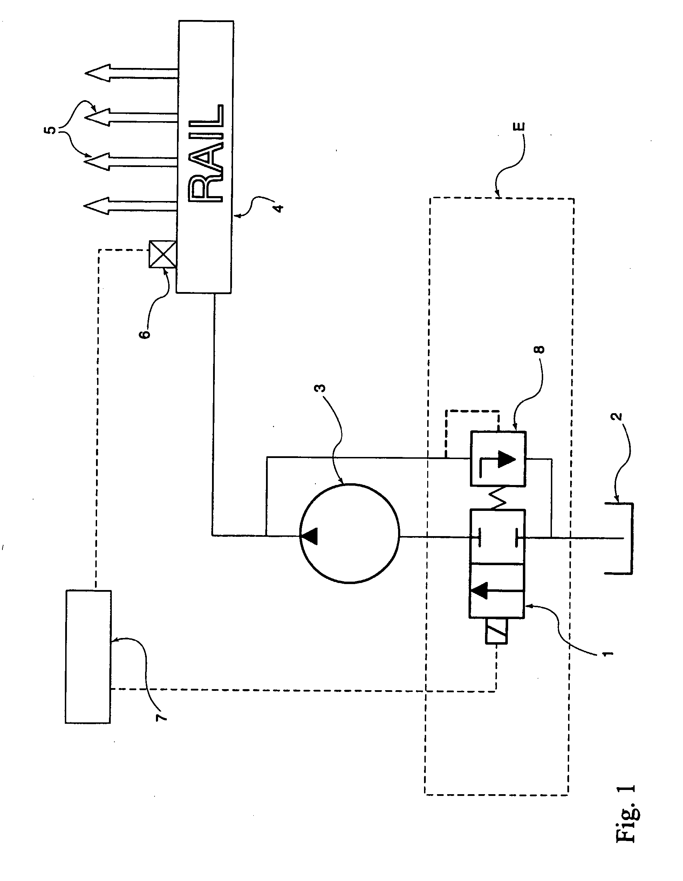

En référence à la figure 1, l'électrovanne (1) de l'invention est disposée entre le réservoir (2) de carburant du véhicule et une pompe à haute pression (3) destinée à alimenter en essence le rail commun (4). Celui-ci alimente des injecteurs (5) fournissant l'essence aux cylindres du moteur. Le rail (4) est par ailleurs pourvu d'un capteur de pression (6) relié à une unité centrale électronique (7) qui fournit notamment une consigne de courant à l'électroaimant de l'électrovanne (1). Le fonctionnement se fait par conséquent en boucle fermée. Le clapet (8) contrôle une boucle reliant la partie du circuit qui est à haute pression (en aval de la pompe (3)) et la partie du circuit à basse pression (en amont de ladite pompe (3)). Cette boucle rejoint de fait la sortie de la pompe à l'entrée de l'électrovanne (1), en aval du réservoir de carburant (2).

Lorsqu'une surpression est détectée dans le rail (4), par le capteur de pression (6), l'unité électronique (7) envoie une consigne de courant nulle ou faible de telle sorte que le clapet (8) puisse s'ouvrir sous l'effet de ladite surpression. De l'essence est alors renvoyée vers le réservoir (2). La vanne de régulation de débit (1) et le clapet (8) sont en réalité réunis dans une seule entité (E), qui constitue l'électrovanne de régulation de débit et de pression selon l'invention.

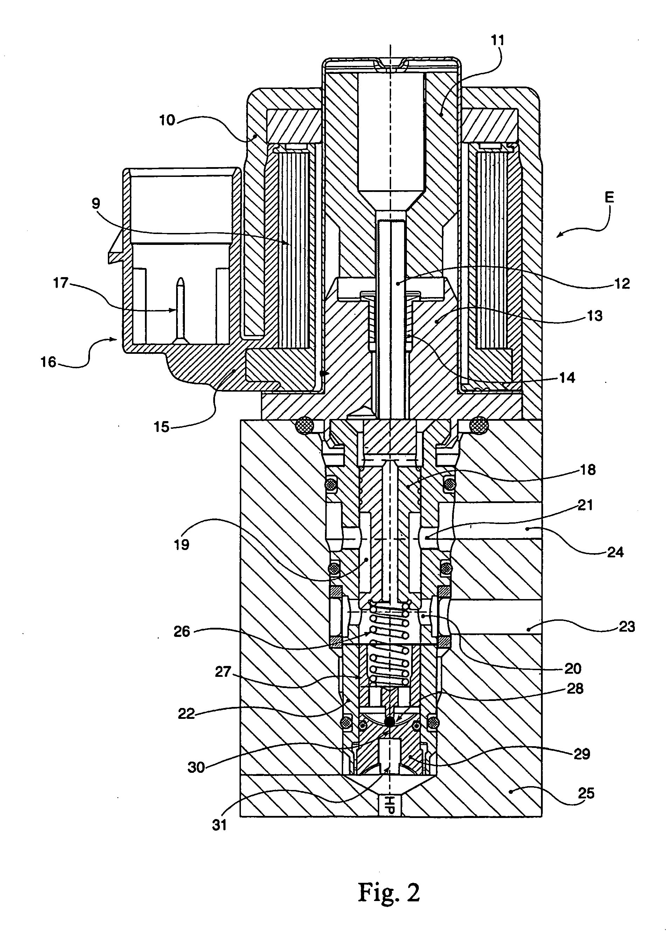

Elle est représentée plus en détail en figure 2, et est composée d'un sous-ensemble électrique qui surmonte un sous-ensemble hydraulique. Classiquement, les fonctionnalités électriques sont assurées par un électroaimant qu'il n'est nullement nécessaire de décrire en détail, dans le cadre de l'invention, car il est connu en soi. Il suffit de savoir qu'il se compose d'une bobine (9) intégrée notamment dans une armature magnétique (10) entourant un noyau mobile (11), lequel entraîne un poussoir (12) notamment guidé par une pièce polaire basse (13) dont la partie supérieure est dessinée de telle sorte que la variation de l'entrefer qu'elle forme avec le noyau mobile (11) permette de générer une force électromagnétique la plus constante possible sur la course du noyau (11). Un palier (14) améliore le guidage et le coulissement du poussoir (12). L'électroaimant est surmoulé dans une enveloppe (15) intégrant un connecteur externe (16) contenant des bornes (17) de connexion, pour le raccorder par exemple à l'unité centrale électronique.

Le poussoir (12) agit sur un tiroir (18) mobile en coulissement muni d'un évidement périphérique (19) prévu pour mettre en relation un orifice d'alimentation (20) et un orifice d'échappement (21) pratiqués dans la chemise (22) du sous-ensemble hydraulique. Ces orifices (20) et (21) sont raccordés, via des conduits (23, 24) d'un bâti (25), au circuit à basse pression. Plus précisément, le conduit (23) et l'orifice (20) d'alimentation sont reliés au réservoir de carburant, alors que l'orifice (21) et le conduit (24) d'échappement sont raccordés à la pompe (3) haute pression.

Un ressort à boudins (26) est disposé dans l'axe du tiroir (18). L'une de ses extrémités est fixée dans un logement axial dudit tiroir (18), alors que son autre extrémité actionne un manchon (27) faisant partie du dispositif à clapet, lequel comprend également une bille (28). Le manchon (27) coulisse dans l'alésage central de la chemise (22), comme le tiroir (18). La bille (28) repose sur un siège (37) réalisé dans une pièce (29) réalisant la liaison avec le circuit haute pression.

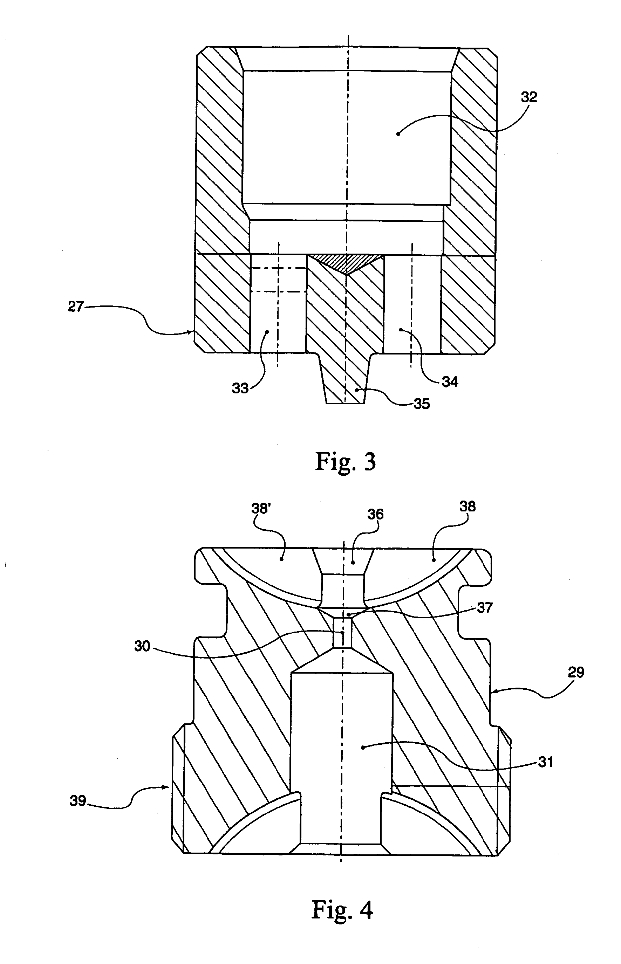

Ainsi, cette pièce (29) comporte un orifice d'admission (30) situé immédiatement sous le siège (37) de la bille (28) et prolongé par un conduit (31) véhiculant le fluide à haute pression. Le manchon (27) du dispositif à clapet ainsi que la pièce (29) sont respectivement montrés plus en détail en figures 3 et 4. Le manchon (27) comporte, dans sa face en regard du tiroir (18), un logement cylindrique (32) apte à recevoir l'une des extrémités du ressort (26). Le diamètre de ce logement se ressert progressivement vers l'intérieur, afin de fixer l'extrémité du ressort (26). Dans le prolongement du logement (32), des canaux (34 et 34') permettent le passage du fluide à travers le manchon (27). Ces canaux, au nombre d'au moins deux, entourent un promontoir (35) cylindrique dont le diamètre est calculé pour s'insérer dans un conduit (36) de la pièce (29), afin de maintenir une pression sur la bille lorsqu'elle est en appui sur son siège (37) (voir fig. 4). Des voies d'évacuation du fluide (38 et 38') sont disposées de part et d'autre du conduit (36) et du siège (37), réalisées au moyen d'une fraise cylindrique d'épaisseur inférieure à celle du conduit (36). Le filetage (39) permet de régler la position de la pièce (29) pour affiner le fonctionnement du dispositif à clapet.

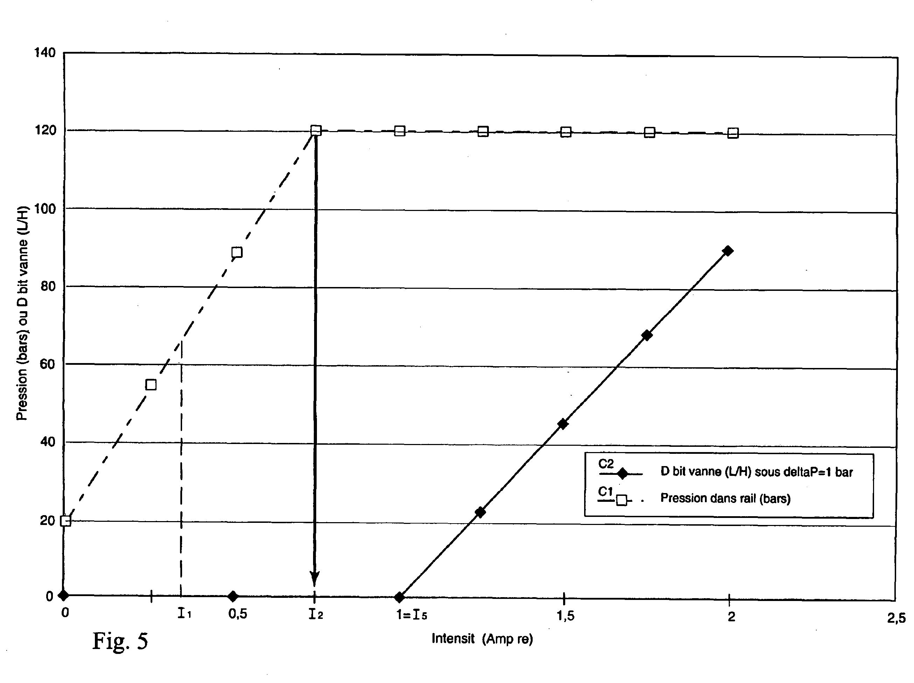

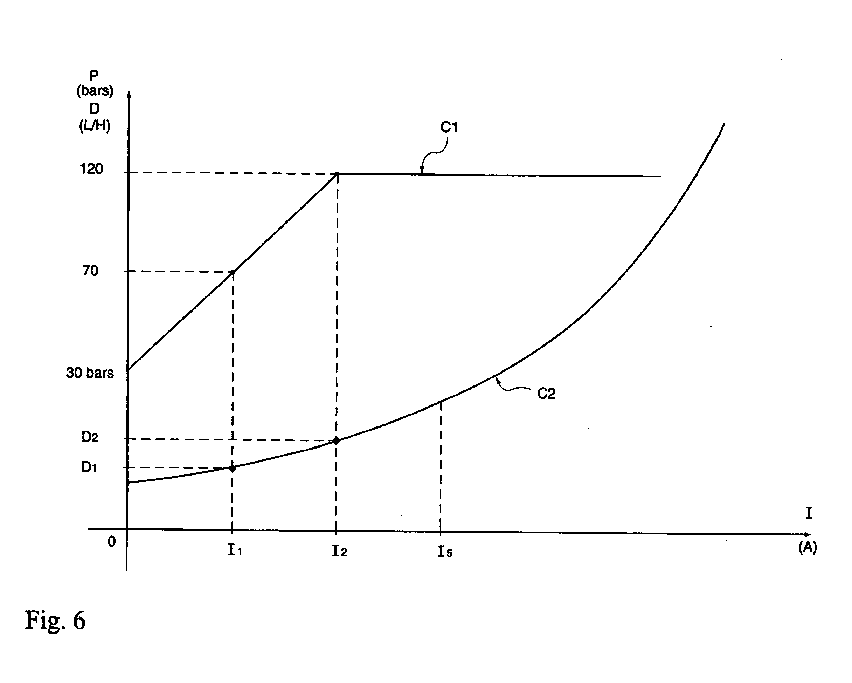

L'étanchéité des différents composants est assurée par des joints toriques répartis tout autour de la chemise (22). Le fonctionnement de l'ensemble s'explique plus aisément en référence aux diagrammes des figures 5 et 6. En particulier, le fonctionnement théorique apparaît en figure 5. Lorsque le courant est égal à zéro, la force exercée par le ressort (26) sur le dispositif à clapet et notamment la bille (28) permet de contenir une pression dans le rail (4) de l'ordre de 20 à 30 bars. Pour une pression supérieure, le clapet s'ouvre et la surpression se décharge dans la chemise (22), à destination de l'orifice (20) et du conduit (23). La courbe du débit (C₂) montre en effet que, pour cette valeur du courant, il n'y a théoriquement aucun débit entre l'orifice d'alimentation (20) et l'orifice d'échappement (21). Compte tenu de l'emplacement de l'évidement périphérique (19), cette absence de débit se prolonge jusqu'à une valeur d'environ un ampère, à la suite de laquelle le débit augmente linéairement. Or, entre zéro et un ampère, et à mesure que l'intensité du courant de commande de l'électroaimant augmente, la force exercée via le ressort (26) sur le dispositif à clapet, et par conséquent sur la bille (28) augmente également, lui permettant de contenir une pression de plus en plus grande dans la partie du circuit à haute pression (courbe C₁). Il faut que, dans le cadre de l'invention, la pression nominale de fonctionnement (120 bars sur la figure), soit atteinte pour une valeur du courant inférieure à la valeur seuil à partir de laquelle le débit augmente linéairement (un ampère sur la courbe C₂). Cette condition permet de réguler le débit au ralenti de manière très précise et avec une pression constante.

En réalité, la courbe du débit (C₂) a plutôt l'allure qui apparaît en figure 6. Des fuites existent avant l'obtention du seuil d'intensité mettant en relation directe, via l'évidement (19), l'orifice d'admission (20) et l'orifice d'échappement (21). Ces fuites, à condition d'être contrôlées, ne constituent pas réellement un inconvénient majeur à l'invention. Il faut cependant qu'elles soient inférieures au débit d'essence nécessaire au fonctionnement au ralenti du moteur. Sachant que les injecteurs fonctionnent à partir d'une pression dans le rail équivalant à environ 70 bars, il faut que pour cette valeur, le débit de fuite D₁, correspondant à un courant de consigne I₁ soit inférieur au débit d'essence nécessaire au fonctionnement au ralenti.

Dans l'hypothèse d'un moteur fonctionnant avec une pression nominale dans le rail de 120 bars, il faut ensuite que cette pression soit contenue par le dispositif à clapet pour une valeur I₂ du courant, correspondant à un débit de fuite D₂ au niveau du tiroir inférieur à la valeur I₆ de seuil à partir de laquelle la liaison est établie entre les orifices d'alimentation (20) et d'échappement (21).

En fonctionnement réel, le débit de fuite n'est donc pas nul quand le courant est égal à zéro (I=0), et il augmente lorsque I augmente.

Encore une fois, il est préférable que la valeur I₂ soit inférieure et clairement séparée de la valeur Iₛ pour ne pas introduire de variations de pression dans le rail susceptibles de faire varier le régime moteur et donc d'engendrer du bruit ou des problèmes de fonctionnement moteur.

L'exigence des débits de fuite inférieurs au débit d'essence nécessaire au fonctionnement au ralenti du moteur implique la fixation de valeurs limites pour D₁ et D₂. En réalité, les expériences faites avec des prototypes d'électrovanne selon l'invention montrent que même lorsque le débit de fuite est supérieur à ces valeurs limites, le fonctionnement est satisfaisant. Il s'agit alors d'un fonctionnement appelé mode mixte, où les deux courbes sont telles que Iₛ < I₂, ce qui veut dire que le fonctionnement linéaire de la régulation en débit intervient avant que la valeur de pression nominale de fonctionnement ne soit atteinte dans le rail (4).

Il est à noter que, compte tenu de la conception spécifique à l'invention, un tel fonctionnement peut être géré car le montant du débit de fuite excédant les valeurs seuil D₁ et D₂ peut être recirculé grâce au dispositif à clapet, au moyen de l'information fournie à l'unité centrale électronique par le capteur de pression.

## Revendications

1. Electrovanne de régulation de débit et de pression (1) utilisable dans un circuit comportant une partie en basse pression et une partie en haute pression, contrôlant le débit d'un fluide à basse pression à l'aide d'un tiroir coulissant (18) dans une chemise (22) dans laquelle sont pratiqués au moins un orifice respectivement d'alimentation (20) et d'échappement (21) dudit fluide, ledit tiroir (18) étant actionné électriquement au moyen d'un électroaimant agissant à l'encontre de moyens de rappel (26) prévus pour qu'à courant de commande de l'électroaimant nul, le passage entre les orifices d'alimentation (20) et d'échappement (21) soit obturé, puis progressivement dégagé à partir d'une valeur seuil de courant, la régulation de pression s'appliquant au fluide à haute pression, **caractérisé en ce que** les moyens de rappel (26) sont interposés entre le tiroir (18) et un dispositif à clapet apte à obturer un orifice d'admission (30) dans la chemise (22) de fluide à haute pression, communiquant avec l'orifice d'alimentation (20) de fluide à basse pression au moins dans la position du tiroir (18) correspondant à un courant de commande inférieur à ladite valeur seuil, les moyens de rappel (26) étant positionnés et dimensionnés de manière à ce que le clapet puisse être ouvert pour un courant égal à ou proche de zéro, en vue de faire chuter la pression dans le circuit haute pression.

2. Electrovanne de régulation de débit et de pression (1) selon la revendication précédente, **caractérisé en ce que** le tiroir mobile (18) est positionné et dimensionné de telle sorte que les orifices d'alimentation (20) et d'échappement (21) du fluide à basse pression ne soient pas mis en communication avant que la force exercée par le tiroir (18) via les moyens de rappel (26) sur le dispositif à clapet, en vue de la fermeture de ce dernier, soit suffisante pour assurer ladite fermeture lorsque la pression atteinte dans le circuit à haute pression est la pression nominale de fonctionnement.

3. Electrovanne de régulation de débit et de pression (1) selon l'une des revendications précédentes, **caractérisé en ce que** le tiroir (18) est entraîné par un poussoir (12) solidaire du noyau mobile (11) de l'électroaimant, les moyens de rappel étant constitués d'un ressort à boudins (26) disposé axialement entre l'extrémité du tiroir (18) et le dispositif à clapet.

4. Electrovanne de régulation de débit et de pression (1) selon l'une quelconque des revendications précédentes, **caractérisé en ce que** le dispositif à clapet comporte un manchon (27) coulissant dans la chemise (22) et actionné par les moyens de rappel (26) présentant un bras axial muni d'une extrémité d'allure hémisphérique pouvant obturer l'orifice d'admission du fluide (30), ledit orifice (30) débouchant, dans le volume de la chemise (22), au niveau d'un siège (37) sur lequel l'extrémité hémisphérique est plaquée, en cas de fermeture du clapet.

5. Electrovanne de régulation de débit et de pression selon l'une quelconque des revendications 1 à 3, **caractérisée en ce que** le dispositif à clapet comporte une bille (28) pouvant obturer l'orifice d'admission du fluide (30) à haute pression, ledit orifice (30) débouchant, dans le volume de la chemise (22), au niveau d'un siège (37) sur lequel la bille (28) est plaquée, en cas de fermeture du clapet, par un manchon (27) du dispositif à clapet coulissant dans ladite chemise (22) et actionné par les moyens de rappel (26).

6. Electrovanne de régulation de débit et de pression (1) selon l'une des revendications 4 et 5, **caractérisée en ce que** le siège (37) consiste en un conduit axial (36) débouchant dans la chemise (22) et chanfreiné au niveau de sa liaison avec l'orifice d'admission (30), ledit conduit (36) étant flanqué d'espaces de dégagement du fluide ouverts sur le volume de la chemise (22) et obtenus par un coup de fraise cylindrique respectivement d'épaisseur inférieure et d'axe perpendiculaire à celui du conduit (36).

7. Electrovanne de régulation de débit et de pression (1) selon la revendication précédente, **caractérisée en ce que**, lorsque le dispositif à clapet est à bille (28), le manchon (27) comporte un promontoire (35) central axial prévu pour s'insérer dans le conduit (36) du siège (37) et exercer une force sur la bille (28).

8. Electrovanne de régulation de débit et de pression (1) selon la revendication 6, **caractérisé en ce que**, lorsque le dispositif à clapet est à bras axial à extrémité hémisphérique, ledit bras est prévu pour s'insérer dans le conduit (36) du siège (37) et obturer l'orifice d'admission (30).

9. Electrovanne de régulation de débit et de pression (1) selon l'une des revendications 4 à 9, **caractérisé en ce que** ledit manchon (27) présente au moins un canal (34, 34') pour le passage du fluide vers le tiroir (18).

10. Electrovanne de régulation de débit et de pression (1) selon l'une des revendications précédentes, **caractérisée en ce que** l'orifice d'admission (30) est pratiqué dans une pièce (29) obturant la chemise (22), et dont la position est réglable par rapport à elle.

11. Electrovanne de régulation de débit et de pression (1) selon l'une quelconque des revendications précédentes, **caractérisée en ce que** les moyens de rappel (26) exercent sur le clapet, pour un courant de commande de l'électroaimant égal à zéro, une force telle qu'il faut que le fluide ait une pression de l'ordre de 30 bars pour l'ouvrir.

12. Système d'injection d'essence pour moteur thermique à rail (4) commun, comportant un rail (4) commun, une pompe (3) , un réservoir (2) et ne electrovanne (1) munie d'un orifice d'admission (30) d'essence, ledit rail (4) étant alimenté en essence à haute pression par une pompe (3) elle-même alimentée par de l'essence à basse pression en provenance du réservoir (2) via une électrovanne (1) selon les revendications à 11, **caractérisé en ce que** l'orifice d'admission (30) de l'électrovanne (1) est connecté au circuit de fluide à haute pression en aval de la pompe (3), et **en ce que** le rail (4) commun comporte un capteur de pression (6) relié à une unité centrale électronique (7) fournissant la consigne de courant à l'électroaimant de l'électrovanne (1).

13. Système d'injection d'essence pour moteur thermique selon la revendication précédente, **caractérisé en ce que** l'unité centrale électronique (7) envoie, lorsque le capteur (6) détecte une surpression par rapport à la pression nominale de fonctionnement du rail (4), un signal de consigne de courant nul à l'électroaimant, permettant l'ouverture du clapet et la circulation du fluide de la sortie de la pompe (3) vers le réservoir (2).

## Claims

1. Discharge-rate and pressure-control solenoid valve (1) that can be used in a circuit comprising a low-pressure portion and a high-pressure portion, controlling the flow rate of a fluid at low pressure with the aid of a spool (18) sliding in a sleeve (22) in which are made at least one orifice respectively an orifice for supplying (20) and an orifice for discharging (21) said fluid, said spool (18) being actuated electrically by means of an electromagnet acting against return means (26) provided so that, at a zero control current of the electromagnet, the passageway between the supply orifice (20) and discharge orifice (21) is closed off, then progressively cleared starting from a threshold current value, the regulation of pressure being applied to the high-pressure fluid, **characterized in that** the return means (26) are interposed between the spool (18) and a device with a valve element capable of closing off an inlet orifice (30) for the inlet into the sleeve (22) of fluid at high pressure, communicating with the supply orifice (20) for supplying fluid at low pressure at least in the position of the spool (18) corresponding to a control current below said threshold value, the return means (26) being positioned and dimensioned so that the valve element can be opened for a current equal to or close to zero, for the purpose of causing the pressure in the high-pressure circuit to fall.

2. Discharge-rate and pressure-control solenoid valve (1) according to the preceding claim, **characterized in that** the movable spool (18) is positioned and dimensioned such that the supply orifice (20) and discharge orifice (21) for the fluid at low pressure are not placed in communication before the force exerted by the spool (18) via the return means (26) on the valve-element device, for the purpose of closing the latter, is sufficient to ensure said closure when the pressure reached in the high-pressure circuit is the nominal operating pressure.

3. Discharge-rate and pressure-control solenoid valve (1) according to one of the preceding claims, **characterized in that** the spool (18) is operated by a thruster (12) secured to the movable core (11) of the electromagnet, the return means consisting of a coil spring (26) placed axially between the end of the spool (18) and the valve-element device.

4. Discharge-rate and pressure-control solenoid valve (1) according to any one of the preceding claims, **characterized in that** the valve-element device comprises a bushing (27) sliding in the sleeve (22) and actuated by the return means (26) having an axial arm furnished with an end with a hemispherical appearance that can close off the fluid inlet orifice (30), said orifice (30) leading into the volume of the sleeve (22) at a seat (37) on which the hemispherical end is pressed, in the event of closure of the valve element.

5. Discharge-rate and pressure-control solenoid valve according to any one of Claims 1 to 3, **characterized in that** the valve-element device comprises a ball (28) that can close off the high-pressure fluid inlet orifice (30), said orifice (30) leading into the volume of the sleeve (22) at a seat (37) on which the ball (28) is pressed, in the event of closure of the valve element, by a bushing (27) of the valve-element device sliding in said sleeve (22) and actuated by the return means (26).

6. Discharge-rate and pressure-control solenoid valve (1) according to one of Claims 4 and 5, **characterized in that** the seat (37) consists of an axial duct (36) opening into the sleeve (22) and bevelled at its connection with the inlet orifice (30), said duct (36) being flanked by fluid-clearance spaces that are open on the volume of the sleeve (22) and obtained by a brief operation with a cylindrical cutter respectively with a lesser thickness and having an axis perpendicular to that of the duct (36).

7. Discharge-rate and pressure-control solenoid valve (1) according to the preceding claim, **characterized in that**, when the valve-element device has a ball (28), the bushing (27) comprises a central axial promontory (35) provided to be inserted into the duct (36) of the seat (37) and to exert a force on the ball (28).

8. Discharge-rate and pressure-control solenoid valve (1) according to Claim 6, **characterized in that**, when the valve-element device has an axial arm with a hemispherical end, said arm is provided to be inserted into the duct (36) of the seat (37) and to close off the inlet orifice (30).

9. Discharge-rate and pressure-control solenoid valve (1) according to one of Claims 4 to 9, **characterized in that** said bushing (27) has at least one channel (34, 34') for the fluid to travel towards the spool (18).

10. Discharge-rate and pressure-control solenoid valve (1) according to one of the preceding claims, **characterized in that** the inlet orifice (30) is made in a part (29) closing off the sleeve (22) and of which the position can be adjusted relative to it.

11. Discharge-rate and pressure-control solenoid valve (1) according to any one of the preceding claims, **characterized in that** the return means (26) exert on the valve element, for a control current equal to zero of the electromagnet, a force such that the fluid must have a pressure of the order of 30 bar in order to open it.

12. Petrol injection system for heat engine with common-rail (4), comprising a common rail (4), a pump (3), a tank (2) and a solenoid valve (1) furnished with a petrol inlet orifice (30), said rail (4) being supplied with petrol at high pressure by a pump (3) itself supplied with petrol at low pressure originating from the tank (2) via a solenoid valve (1) according to Claims 1 to 11, **characterized in that** the inlet orifice (30) of the solenoid valve (1) is connected to the high-pressure fluid circuit downstream of the pump (3) and **in that** the common rail (4) comprises a pressure sensor (6) connected to a central electronic unit (7) supplying the current setting to the electromagnet of the solenoid valve (1).

13. Petrol injection system for a heat engine according to the preceding claim, **characterized in that** the central electronic unit (7) sends, when the sensor (6) detects an overpressure relative to the nominal operating pressure of the rail (4), a zero current setting signal to the electromagnet, allowing the valve element to be opened and the fluid to travel from the outlet of the pump (3) to the tank (2).

## Patentansprüche

1. Magnetventil zur Durchsatz- und Druckregelung (1), das in einem Kreislauf verwendet werden kann, der einen Hochdruckteil und einen Niederdruckteil aufweist, das den Durchsatz eines Niederdruckfluids mit Hilfe eines Gleitschiebers (18) in einer Hülle (22) steuert, in der mindestens eine Einspeise- (20) bzw. eine Ausströmöffnung (21) des Fluids ausgearbeitet sind, wobei der Schieber (18) elektrisch mittels eines Elektromagnets betätigt wird, der gegen Rückstelleinrichtungen (26) wirkt, die vorgesehen sind, damit bei einem Steuerstrom Null des Elektromagnets der Durchgang zwischen der Einspeiseöffnung (20) und der Ausströmöffnung (21) verschlossen ist, dann ausgehend von einem Stromschwellwert progressiv freigegeben wird, wobei die Druckregelung an das Hochdruckfluid angewendet wird, **dadurch gekennzeichnet, dass** die Rückstelleinrichtungen (26) zwischen den Schieber (18) und eine Klappenvorrichtung eingefügt sind, die eine Ansaugöffnung (30) in der Hülle (22) von Hochdruckfluid verschließen kann, die mit der Niederdruckfluid-Einspeiseöffnung (20) zumindest in der Stellung des Schiebers (18) in Verbindung steht, die einem Steuerstrom unter dem Schwellwert entspricht, wobei die Rückstelleinrichtungen (26) so positioniert und bemessen sind, dass die Klappe für einen Strom gleich oder nahe Null geöffnet werden kann, um den Druck im Hochdruckkreislauf abfallen zu lassen.

2. Magnetventil zur Durchsatz- und Druckregelung (1) nach dem vorhergehenden Anspruch, **dadurch gekennzeichnet, dass** der bewegliche Schieber (18) so positioniert und bemessen ist, dass die Einspeise- (20) und Ausströmöffnungen (21) des Niederdruckfluids nicht in Verbindung gebracht werden, ehe die von dem Schieber (18) über die Rückstelleinrichtungen (26) auf die Klappenvorrichtung zum Schließen dieser letzteren ausgeübte Kraft ausreichend ist, um das Schließen zu gewährleisten, wenn der in dem Hochdruckkreislauf erreichte Druck der Nennbetriebsdruck ist.

3. Magnetventil zur Durchsatz- und Druckregelung (1) nach einem der vorhergehenden Ansprüche, **dadurch gekennzeichnet, dass** der Schieber (18) durch einen Drücker (12) angetrieben wird, der fest mit dem Tauchkern (11) des Elektromagnets verbunden ist, wobei die Rückstelleinrichtungen aus einer Spiralfeder (26) bestehen, die axial zwischen dem Ende des Schiebers (18) und der Klappenvorrichtung angeordnet ist.

4. Magnetventil zur Durchsatz- und Druckregelung (1) nach einem der vorhergehenden Ansprüche, **dadurch gekennzeichnet, dass** die Klappenvorrichtung eine Muffe (27) aufweist, die in der Hülle (22) gleitet und von den Rückstelleinrichtungen (26) betätigt wird, die einen axialen Arm aufweist, der mit einem halbkugelförmigen Ende versehen ist, das die Ansaugöffnung des Fluids (30) verschließen kann, wobei die Öffnung (30) im Volumen der Hülle (22) im Bereich eines Sitzes (37) mündet, auf den das halbkugelförmige Ende im Fall des Schließens der Klappe gedrückt wird.

5. Magnetventil zur Durchsatz- und Druckregelung nach einem der Ansprüche 1 bis 3, **dadurch gekennzeichnet, dass** die Klappenvorrichtung eine Kugel (28) aufweist, die die Ansaugöffnung (30) des Hochdruckfluids verschließen kann, wobei die Öffnung (30) in das Volumen der Hülle (22) im Bereich eines Sitzes (37) mündet, auf den die Kugel (28) im Fall des Schließens der Klappe durch eine Muffe (27) der Klappenvorrichtung gedrückt wird, die in der Hülle (22) gleitet und von den Rückstelleinrichtungen (26) betätigt wird.

6. Magnetventil zur Durchsatz- und Druckregelung (1) nach einem der Ansprüche 4 und 5, **dadurch gekennzeichnet, dass** der Sitz (37) aus einer axialen Rohrleitung (36) besteht, die in die Hülle (22) mündet und im Bereich ihrer Verbindung mit der Ansaugöffnung (30) abgeschrägt ist, wobei die Rohrleitung (36) von Freisetzungsräumen des Fluids flankiert wird, die auf das Volumen der Hülle (22) offen sind und durch einen zylindrischen Fräshub erhalten werden, je mit einer Dicke geringer als und einer Achse lotrecht zu derjenigen der Rohrleitung (36).

7. Magnetventil zur Durchsatz- und Druckregelung (1) nach dem vorhergehenden Anspruch, **dadurch gekennzeichnet, dass**, wenn die Klappenvorrichtung mit Kugel (28) ist, die Muffe (27) einen axialen zentralen Vorsprung (35) aufweist, der vorgesehen ist, um sich in die Rohrleitung (36) des Sitzes (37) einzufügen und eine Kraft auf die Kugel (28) auszuüben.

8. Magnetventil zur Durchsatz- und Druckregelung (1) nach Anspruch 6, **dadurch gekennzeichnet, dass**, wenn die Klappenvorrichtung einen axialen Arm mit halbkugelförmigem Ende hat, der Arm vorgesehen ist, um sich in die Rohrleitung (36) des Sitzes (37) einzufügen und die Ansaugöffnung (30) zu verschließen.

9. Magnetventil zur Durchsatz- und Druckregelung (1) nach einem der Ansprüche 4 bis 9, **dadurch gekennzeichnet, dass** die Muffe (27) mindestens einen Kanal (34, 34') für den Durchgang des Fluids zum Schieber (18) aufweist.

10. Magnetventil zur Durchsatz- und Druckregelung (1) nach einem der vorhergehenden Ansprüche, **dadurch gekennzeichnet, dass** die Ansaugöffnung (30) in einem Bauteil (29) ausgearbeitet ist, das die Hülle (22) verschließt und dessen Stellung in Bezug auf diese einstellbar ist.

11. Magnetventil zur Durchsatz- und Druckregelung (1) nach einem der vorhergehenden Ansprüche, **dadurch gekennzeichnet, dass** die Rückstelleinrichtungen (26) auf die Klappe für einen Steuerstrom des Elektromagnets gleich Null eine solche Kraft ausüben, dass das Fluid einen Druck in der Größenordnung von 30 Bar haben muss, um sie zu öffnen.

12. Benzineinspritzsystem für einen Verbrennungsmotor mit Common-Rail (4), das ein Common-Rail (4) eine Pumpe (3), einen Tank (2) und ein Magnetventil (1) aufweist, das mit einer Benzinansaugöffnung (30) versehen ist, wobei das Rail (4) von einer Pumpe (3) mit Hochdruck-Benzin gespeist wird, die selbst mit Niederdruck-Benzin vom Tank (2) über ein Magnetventil (1) nach den Ansprüchen 1 bis 11 gespeist wird, **dadurch gekennzeichnet, dass** die Ansaugöffnung (30) des Magnetventils (1) mit dem Hochdruckfluidkreislauf hinter der Pumpe (3) verbunden ist, und dass das Common-Rail (4) einen Drucksensor (6) aufweist, der mit einer elektronischen Zentraleinheit (7) verbunden ist, die den Stromsollwert an den Elektromagnet des Magnetventils (1) liefert.

13. Benzineinspritzsystem für einen Verbrennungsmotor nach dem vorhergehenden Anspruch, **dadurch gekennzeichnet, dass** die elektronische Zentraleinheit (7), wenn der Sensor (6) einen Überdruck bezüglich des Nennbetriebsdrucks des Rails (4) feststellt, ein Stromsollsignal Null an den Elektromagnet schickt, das die Öffnung der Klappe und die Zirkulation des Fluids vom Ausgang der Pumpe (3) zum Tank (2) erlaubt.
